# EUROPEAN PATENT APPLICATION

(11) **EP 4 840 307 A1**
(43) Date of publication of application: **18.11.2026**
(21) Application number: 25176969.1
(22) Date of filing: 16.05.2025
(51) Int. Cl.: A01M 7/00, G06V 20/10

(54) **METHOD AND SYSTEM FOR APPLYING A VARIABLE RATE OF AN AGRICULTURAL PRODUCT FOR ROW CROPS**

(71) Applicant: Yara International ASA, 0277 Oslo (NO)
(72) Inventor: PORTZ, Gustavo, 0277 Oslo (NO); REUSCH, Stefan, 0277 Oslo (NO); RATHEE, Geetika, 0277 Oslo (NO); CASTELLANO CAMPUZANO, Clara, E-28020 Madrid (ES); MORENO GARCIA, Juan Jose, E-28020 Madrid (ES); GARCIA ALVARO, Alejandro, E-28020 Madrid (ES)
(74) Representative: AWA Sweden AB

(57) **Abstract**

The present disclosure concerns a method of determining an application rate of an agricultural product for row crops in an agricultural field, the method comprising determining a position of an agricultural machine, wherein the agricultural machine is moving along crop rows in an agricultural field; receiving remote imagery based on the determined position; determining an area based on the position and the moving direction of the agricultural machine; determining an agricultural property amount within the determined area based on the received remote imagery; determining an application rate of an agricultural product for the determined area based on the determined agricultural property amount.

## Description

### Technical field

The present disclosure relates to a method and system for applying a variable rate of an agricultural product for row crops in the field of precision agriculture.

### Background

The application of agricultural products for orchards and fields with other type of row crops is usually carried out by means of foliar applications, in form of sprayed products, or under the plant canopy in form of spread products, which increase the product efficiency and plant development at specific stages of growth during the season.

While newer application systems and agricultural machines may comprise several sensors which can allow a targeted and/or variable application rate of the agricultural products, most of the available application systems are set at a fixed application rate. The fixed application rate is used throughout the orchard or field to which the agricultural product is applied, in order to ensure an accurate application of the product. Hereinbelow, the terms orchard, agricultural field, and field may be used interchangeably.

For these application systems, the application rate is therefore independent of the vegetation properties of the crop and of local crop variations. These type of product applications are especially inefficient in areas where no crops are present. Given that row crops usually are positioned interspersed within the individual rows, separated by spaces where no crop at all is present, the agricultural product is just thrown into the air at these spaces, or wrongly applied onto the soil in the case of foliar spraying applications or in case of spread products. Such applications are inefficient and wasteful, with large accumulated losses over the entire field, resulting in economic losses and possible environmental issues.

In order to address these issues and to provide a fully adapted variable application rate of agricultural products, costly sensor arrangements and/or retrofitting of older sprayer or spreading machinery are needed. Sometimes, more advanced agricultural machinery might comprise acoustic or optical sensors which cut-off the application of the agricultural product when an area with no crops is detected. However, most of these sensors are unable to detect variations in plant density, biomass or nutrient status. Consequently, the application rate is not adapted to local crop variations and needs.

There is therefore a need for adapting the application rate of agricultural products based on remote imagery and the available information for the field. Thereby, the amount of agricultural product fits the individual plant needs and is efficiently applied to the target plants, in order to reduce costs and to avoid wasting the product and to reduce the environmental impact of the applied products. Furthermore, the need for expensive sensing systems to be retrofitted to the existing machinery, or the acquisition of new costly machinery should preferably be avoided.

### Summary

According to a first aspect of the present disclosure, this and other objectives are achieved by a method of determining an application rate of an agricultural product for row crops in an agricultural field, the method comprising determining a position of an agricultural machine, wherein the agricultural machine is moving along crop rows in an agricultural field; receiving remote imagery based on the determined position; determining an area based on the position and the moving direction of the agricultural machine; determining an agricultural property amount within the determined area based on the received remote imagery; determining an application rate of an agricultural product for the determined area based on the determined agricultural property amount.

Following this approach, an accurate application rate of the agricultural product can be achieved.

According to a second aspect of the present disclosure, the method further comprises determining the moving speed of the agricultural machine and wherein the determined area is defined as extending from a predetermined position along the moving direction of the agricultural machine, wherein the predetermined position is offset from the position of the agricultural machine based on the moving speed.

Following this approach, the area for which the agricultural property amount shall be determined can be accurately ascertained.

According to a third aspect of the current disclosure, the method further comprises determining at least one of tramlines and/or crop rows present in the agricultural field, and determining the width of the determined area based on the determined at least one of tramlines and/or crop rows.

Following this approach, the width of the determined area can be adjusted to the field properties.

According to a fourth aspect of the current disclosure, the method further comprises determining a length of the determined area based on at least one of an agricultural machine property, a predetermined constraint, a pixel width, crop data or field data.

Following this approach, the length of the determined area can be adjusted to further properties of the field or the machinery.

According to a further aspect of the current disclosure, the received imagery comprises a plurality of pixels and determining the agricultural property amount within the determined area comprises determining the number of pixels comprised in the determined area and generating an agricultural property value for the determined pixels, the method further comprises determining the agricultural property amount within the determined area based on the agricultural property value for the determined pixels.

Following this approach, the agricultural property amount is accurately defined.

According to a further aspect of the current disclosure, determining the number of pixels comprised in the determined area comprises identifying the number of pixels unrelated to the row crop.

Following this approach, the agricultural property amount can ignore contributions from pixels unrelated to the crop, thereby improving computational efficiency.

According to a further aspect of the current disclosure, receiving remote imagery of the agricultural field further comprises receiving historic remote imagery from the ongoing or previous seasons, and adjusting the agricultural property based on the received historic remote imagery.

Following this approach, further insights of the agricultural field can be considered for the determination of the application rate. Furthermore, by utilizing historic data the accuracy of the determined application rate may be improved.

According to a further aspect of the current disclosure, processing the historic remote imagery further comprises identifying at least one of cover crops or weed pixels, and adjusting the agricultural property comprises adjusting the agricultural property based on the identified at least one of cover crops or weed pixels.

Following this approach, the agricultural property amount can be more accurately determined. Furthermore, wasteful use of agricultural product on weeds or other undesirable growth may be prevented.

According to a further aspect of the current disclosure, processing historic remote imagery further comprises receiving row crop type and carrying out at least one of background subtraction, clustering, thresholding based on the row crop type.

Following this approach, relevant information is extracted from the historic remote imagery. Consequently, the historic remote imagery can be more effectively used for determining the agricultural property amount.

According to a further aspect of the current disclosure, the method further comprises applying an agricultural product to the row crops according to the determined application rate.

Following this approach, the agricultural product application can be achieved.

According to further aspects, a system, a data processing apparatus, a computer-readable storage medium, and a computer program product configured to carry out the above discussed methods are envisaged within the present disclosure.

### Brief description of the drawings

The accompanying drawings, which are included to provide a further understanding of the present disclosure and are incorporated in and constitute a part of this specification, illustrate embodiments of the disclosure and together with the description serve to explain the principles of the disclosure.

Fig. 1A shows a schematic representation of a system according to an embodiment of the present disclosure.
Fig. 1B shows a representation of an agricultural machine and an orchard according to one field of application of the present disclosure.
Fig. 2A shows a system according to the main embodiment of the current disclosure, moving through an agricultural field with row crops.
Fig. 2B shows a determined area for agricultural product application according to an embodiment of the current disclosure.
Fig. 3A and 3B show flowchart diagrams of methods according to different embodiments of the current disclosure.
Fig. 4A shows the identification or masking of different pixels within the remote imagery of the orchard.
Fig. 4B shows the application of masking following Figure 4A to an embodiment of the current disclosure.

### Detailed Description

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilized and structural or logical changes may be made without departing from the scope of the present application. The following detailed description, therefore, is not to be taken in a limiting sense, and the scope of the present application is defined by the appended claims.

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

Unless defined otherwise, all terms present in the current disclosure, including technical and scientific terms, have the meaning which a person skilled in the art usually gives them. For further guidance, definitions are included to further explain terms which are used in the description of the disclosure.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the application, and form different embodiments, as would be understood by those in the art. For example, in the appended claims, any of the claimed embodiments can be used in any combination.

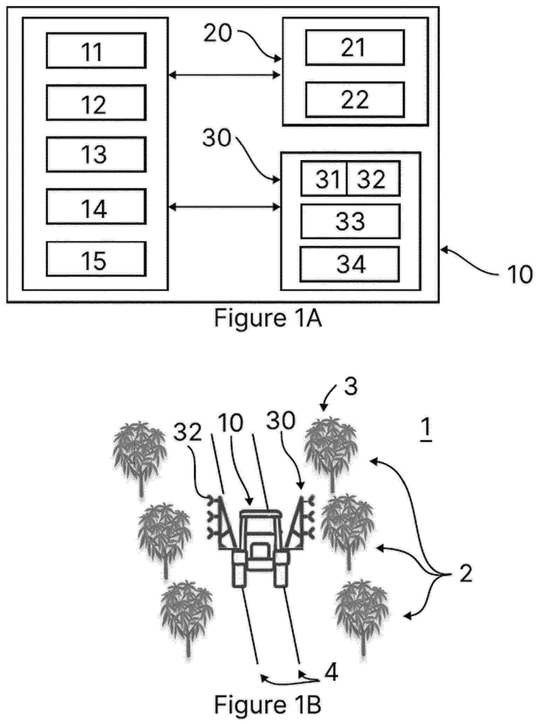

Fig. 1A shows a schematic representation of a system according to an embodiment of the present disclosure. System 10 represents an agricultural machine configured for the application of agricultural products onto row crops. The system 10 may, for example, be a tractor sprayer or spreader, a mounted sprayer or spreader, a tractor coupled to a towed sprayer or spreader attachment, an aerial sprayer or spreader or any other equivalent system which allows moving throughout the agricultural field and configured to apply an agricultural product (e.g. fertilizers, pesticides, bio-stimulants, ...) to the crop by means of spraying or spreading.

System 10 comprises a processing unit 11 configured to carry out the method of the current disclosure, a memory unit 12 configured to store the instructions, which when executed by the processing unit 11 cause the system 10 to carry out the method of the current disclosure. System 10 may further comprise an input unit 13 (e. g. a touch sensitive surface or similar) configured to receive the user input for selecting system configuration options, an output unit 14 (e. g. a display, a printer or the like) configured to display information about the internal states of the system and agricultural information and a positioning unit 15 (such as a GPS unit or any equivalent), configured to determine the position of the system. System 10 comprises a communication unit (not shown) configured to establish communication between the different units and subunits of system 10 and receive external data.

System 10 may comprise further subsystems or units comprised within the usual elements of an agricultural apparatus for the management and setting of different configurations and will not be further described herein. Correspondingly, each unit of system 10 is operatively connected with the remaining units via the communication unit as is customary in the current practice and won't be further discussed herein. System 10 may be operatively connected to a plurality of data inputs represented by data input unit 20. Data input unit 20 may further comprise at least one (21, 22, ...) database or external sources of data relating to soil data, weather data or other agronomical data.

Data input unit 20 comprises remote data. Data input unit 20 may further comprise field data, farm data and / or external data. Data input unit may a separate unit within the system 10, a part of the memory unit 12, or part of an external storage system, e.g., in accessible databases operably connected to system 10. Remote data comprises remote imagery data as provided by satellite platforms or from suitable manned or unmanned imaging aerial vehicles, as will be further discussed below. Remote imagery data may include stored sets of data or real- time data directly accessed from the satellite platforms or the suitable imaging aerial vehicles. Field data may include field properties, topographic data, crop data, harvest data, weather data and / or soil data, as well as historic series of the aforementioned data. Field properties may include field and geographic identifiers regarding the geometry of the boundaries of the agricultural field. The field and geographic identifiers may further include data concerning the presence of areas within the agricultural field which are not managed. Topographic data may include one or more of digital terrain data, absolute or relative height data, spatial coordinates and the like. Crop data may include one or more of crop variety, crop type, growth status, planting data, planting date, plant nutrition status, plant health status, row planting location, i.e. row spacing and/or plant spacing within the row, and the like. Harvest data may include one or more of yield, value, product quality, and / or estimated or recorded historic harvest values. Weather data may comprise current, future and historic weather data, and comprise at least one of wind data, such as wind direction and wind speed, temperature, solar irradiance, sunshine hours, snow or frosting indicator scores, precipitation data, and the like. Precipitation data may comprise at least one of an amount of rain per square surface unit, average precipitation amount per time unit (e.g., day, week, season, year) or the like. Temperature data may comprise at least one of a temperature value or hourly, daily, weekly, monthly or yearly average temperature, minimum and maximum temperatures, or sum thereof and the like. Weather data is publicly and widely available from different providers and may be obtained and/or simulated locally. Soil data may include one or more of soil type, soil pH, soil organic matter (SOM), and/or cation exchange capacity (CEC), amongst others. Soil data may be accessed or retrieved from widely available private or public soil repositories (LUCAS, SSURGO, ...). The present disclosure is not intended to be limited to any specific soil databases and the use of local databases or storage units comprising soil data is as well comprised within the teachings of the current disclosure. Farm data may comprise data concerning planned and past agricultural tasks, like field maintenance practice data, agricultural practice data, fertilizer application data, pesticide application data, irrigation data and / or other field reports, as well as historic series of the aforementioned data. The historic series allow the comparison of present data with past data. The farm data may further include administrative data, like work shifts, work logs and other organizational data. Planned and past tasks may comprise activities like surveillance of plants and pests, application of insecticides, fungicides or crop nutrition products containing nutrients or bio-stimulants, measurements of at least one farm or field parameter, maintenance and repair of ground hardware and other similar activities.

System 10 comprises an application unit 30, comprising a tank, container or reservoir 31 with the agricultural product to be applied, wherein the application unit comprises at least one nozzle or opening 32 configured to apply the agricultural product onto the row crops or the soil under them. The application unit 30 may further comprise a separate processing unit 33, configured to process the instructions generated or transmitted by the system 10 such that the processing unit 33 can instruct the application unit 30 to deliver a specific amount of agricultural product. Additionally or alternatively, the application unit 30 may be directly instructed by the processing unit 11, operatively connected with the application unit 30 by means of a communication unit 34. The operative connection may be a wired connection or wireless connection. The application unit 30 may further comprise other subsystems as customary within the field of agricultural technology and is not limited to the disclosed elements. According to a further embodiment, system 10 may comprise one or more acoustic (e.g. ultrasonic or equivalent) or optical (e.g. photoelectric or photosensing) sensors. The one or more sensors may be mounted on one side, or both sides, of the agricultural machine, to determine if a crop is present. For example, the one or more sensors may be mounted on one side, or both sides, of the application unit 30.

In an advantageous embodiment, the application unit 30, when comprising a spraying unit, comprises at least a first nozzle 32, or a first plurality of nozzles 32 configured to spray to one side of the agricultural machine 30 and at least a second nozzle 32, or a second plurality of nozzles 32, configured to spray to the other side of the agricultural machine. The first and second nozzles are preferably independently configurable to discharge a first and a second rate of agricultural product, such that the crop rows on either side of the agricultural machine can receive an adequate and specific amount of agricultural product. Alternatively, in the case of the agricultural machine comprising a spreader, agricultural machine may comprise within the application unit 30, either a first and second opening to apply the product to be spread independently and at different rates at each side of the agricultural machine. Further alternatively, the agricultural machine may comprise means to vary the application rate accordingly for one side and the other side of the machine.

Fig. 1B shows a schematic representation of an orchard, or agricultural field, with crops 1 in a row arrangement according to the general field of application of the current disclosure. Same references refer to the same features in fig. 1A and 1B. Within the present disclosure, orchard shall be understood as any agricultural field with crops planted in a row configuration. The terms orchard, agricultural field and field may be used interchangeably. Suitable crops for such settings are vines, such as planted in vineyards, fruit trees and plants, such as pear, apple, olive, coffee, or the like, and nut trees and plants such as almond trees pistachio trees, amongst others. The crops may either be evergreen or deciduous. In any case the type of crops are not limited to any of the aforementioned examples. In general, the method of the current disclosure can be applied, referring to fig. 1B, to crops in which a plurality of plants or trees 2 are arranged in a row 3 formation, with a predetermined space between individual trees or plants, even if minimal. A plurality of these rows are arranged over the agricultural field in a substantially parallel configuration, with another predetermined distance between rows. As can be seen in fig. 1B, the system is an agricultural machine 10 . The agricultural machine 10 may drive along the crop rows and is configured to apply the agricultural product onto the crop rows. In fig. 1B, agricultural machine 10 comprises a vertical sprayer, configured to spray an agricultural product on to trees of a certain height. The agricultural machine comprises, as described above, an application unit 30, wherein the application unit further comprises a container or reservoir 31 (shown in fig. 1A) and at least one nozzle 32 configured to control the discharge rate of the agricultural product. Further, as discussed below, fig. 1B shows tramlines 4, which may be present between adjacent crop rows and are left behind as a mark on the field from the transit of agricultural machinery or other vehicles during operation. This will lead to further advantageous modifications of the current disclosure which will be explained below.

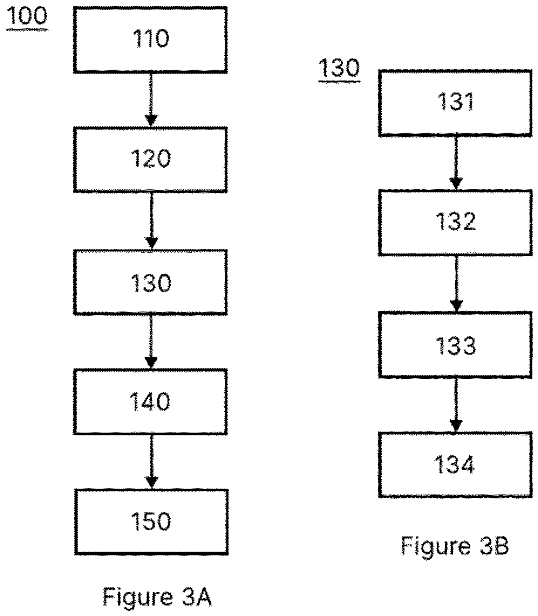

As shown schematically in fig. 3A, according to the main embodiment, the method of determining 100 an application rate of an agricultural product for row crops in an agricultural field, according to the present disclosure, comprises determining 110 a position of an agricultural machine, wherein the agricultural machine is moving along crop rows in an agricultural field.

According to the present disclosure and referring to fig. 1A, determining the position of an agricultural machine comprises receiving position data from the positioning unit 15 of system 10. The positioning unit 15 is further configured to determine a moving speed of the system, or alternatively, the processing unit 11 may be configured to determine the moving speed based on successive positions in time of system 10. Following the determination of the moving speed, the processing unit 11 is configured to determine the driving direction of the agricultural machine.

With reference to fig. 3A, the method further comprises receiving 120 remote imagery based on the determined position,. For the purposes of the current disclosure, very high-resolution imagery is needed in order to accurately detect the crop row elements, hereby referring to a spatial resolutions under 5 m per pixel, more preferably under 1 m per pixel. The present application makes use of suitable remote or proximal imagery for determining field properties. Remote imagery may include any suitable spectral data or RGB images of the aforementioned resolution provided by imaging satellites or suitable manned or unmanned imaging aerial vehicles. The remote imagery may be provided either on real-time or in a time closely related to the time of application of the agricultural product. These satellite or aerial vehicles are configured to communicate by means of dedicated networks and usual methods with system 10, via the communication unit and do not need to be further described herein. Amongst the different remote imagery available for use, satellite data is nowadays widely available from numerous public and/or private providers. The present method is however not limited to a satellite data platform, since the spectral bands which can be of use for the present method are provided in a big range of the standard satellite platforms. Moreover, although referred to as remote imagery or spectral data, any imaging device capable of capturing images at different wavelengths can be used within the current disclosure, including manned or unmanned aerial vehicles equipped with camera devices configured to scan a substantial area of the agricultural field.

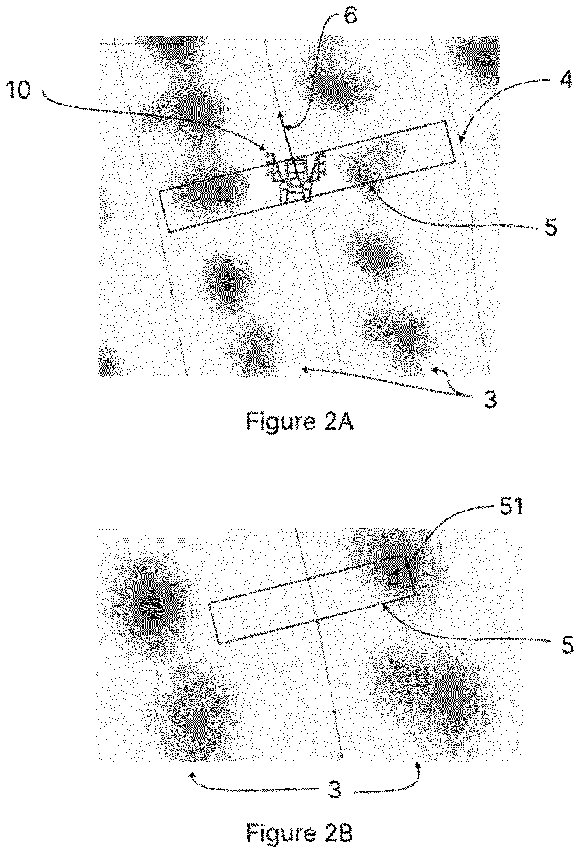

The method further comprises determining 130 an area based on the position of the agricultural machine. According to the present disclosure, an area is to be understood as a shape extending in two principal dimensions, parallel and perpendicular to the moving direction of the agricultural machine. Preferably, the moving direction of the machine may be substantially parallel to the crop rows. The area, according to the present disclosure, may be regular or irregular. The area may thus have different shapes, such as a triangle, a rectangle, a parallelogram, a polygon, or the like. An example following an advantageous embodiment of the current disclosure is shown in fig. 2A. System or agricultural machine 10 travels along the crop rows 3 with a direction as indicated by arrow 6. Hence, according to a first axis defined by the moving direction and a second axis defined perpendicularly to the moving direction, according to this embodiment, area 5 takes the shape of a rectangle.

Referring to fig. 3A, the method further comprises determining 140 an agricultural property amount for the determined area based on the received remote imagery and determining 150 an application rate of an agricultural product for the determined area based on the determined agricultural property amount.

Following the disclosure above regarding the use of remote imagery, the method of the current disclosure further comprises processing the remote imagery or spectral data as obtained from the imaging satellite or suitable imaging aerial vehicles.

In an embodiment, remote imagery or data comprises data relating to different spectral bands. The information from the different spectral bands may be used for improving the determination of the variable rate of the present method. Further preprocessing, compensation and calibration algorithms are considered within the present application, depending on the nature and origin of the remote data. In one embodiment, remote imagery or data is preprocessed for cloud and haze removal and light calibration, which is of advantage may the remote data be provided by means of an imaging satellite as described above. In another embodiment, when the remote data is provided by a manned or unmanned imaging aerial vehicle or drone, cloud correction is not needed, but different ambient light compensation procedures are envisaged to compensate for the ambient light characteristics and sun relative position.

Determining 140 an agricultural property for the determined area based on the remote imagery may comprise generating at least one coefficient derived from the remote imagery or data. Different coefficients (or indexes) have been used in the literature for obtaining different agricultural, soil and vegetation properties like the difference vegetation index and the normalized difference vegetation index (NDVI). However, the NDVI is sensitive to the effects of soil brightness, soil color, atmosphere, clouds, cloud shadows, and leaf canopy shadows and requires remote sensing calibration. In that sense, further coefficients contemplated may comprise the Atmospherically Resistant Vegetation Index (ARVI) to reduce the dependence on atmospheric effects; the Soil-Adjusted Vegetation Index (SAVI) or the Type Soil Atmospheric Impedance Vegetation Index (TSARVI) which take into consideration the distinction of vegetation from the different types of soil background. Apart from the standard vegetation indexes comprised in the state of the art, the present application may make use of further indices which will be described in more detail below. However, the approaches described hereinbelow are not limiting for the disclosure of the current application, and other means of processing the remote imagery or data of suitable spectral bands or any combination thereof to generate a respective vegetation index can be envisaged for determining an agricultural property. For example, within the present disclosure, machine learning approaches based on previous sets of remote imagery and on tested agricultural product application rates, image processing based on specific characteristics of the remote imagery and other alternative methods may be considered.

Usual vegetation indices or coefficients used in the field of remote sensing for the determination of agricultural properties, including crop biomass, crop moisture, crop nutrient status and other agricultural properties include the NDVI, which may be computed as follows NDVI = (NIR-RED)/(NIR+RED), wherein NIR represents the reflectance value related to the Near Infrared wavelengths, at a wavelength range of about 750-950 nm and wherein RED the reflectance measurements acquired in the red visible spectrum, at a wavelength range of about 600-700 nm. Other indices, include the Normalized Difference Water Index (NDWI), expressed as NDWI = (NIR-SWIR) / (NIR+SWIR). Here, NIR represents again the aforementioned Near Infrared wavelengths, and SWIR represents the Short-Wave Infrared wavelengths, at a wavelength in a range of 840-2200 nm, always depending on the different satellite platforms. These and other indices can be envisaged within the present disclosure. By determining the chlorophyll content, directly related to the crop leave volume and nitrogen content, and the dry fresh biomass given as an indication by vegetation coefficients, a more accurate determination of a crop nutrient status can be carried out. The nutrient determination can be used for fertilization applications. However, for the application of other agricultural products (e. g. fungicides, bio-stimulants, ...), a different agricultural property may be utilized, like the biomass or the water content.

Based on the determined agricultural property amount determined area, determining 150 an application rate of an agricultural product for the determined area can be achieved. Hereby, derived from the specific agricultural property, an amount of agricultural product for the determined area can be generated. For example, for a determined amount of biomass within the specific area, the right amount of agricultural product can be determined. Further, within the current disclosure, using of available field data (crop type, growth stage) is contemplated to determine the amount of agricultural product to be applied.

According to a further embodiment, the method further comprises determining the moving speed of the agricultural machine and wherein the determined area is defined as extending from a predetermined position along the moving direction of the agricultural machine, wherein the predetermined position is offset from the position of the agricultural machine, based on the moving speed.

Following this embodiment, predetermined offsets between the positioning unit location (usually providing the location signal for the agricultural machine's cabin or nearby the cabin) and the application unit (which in some cases may be positioned up to several meters behind the cabin, due to the length of the towed attachment) can be compensated for. Moreover, based on the moving speed of the agricultural machine, the offset can be determined more accurately and the processing unit lag, due to the computational effort or network bandwidth limitations, can be observed, hereby increasing the accuracy.

Referring to fig. 3B, according to a further embodiment, the method further comprises determining 131 a length, where the length is defined as the dimension parallel to the moving direction of the agricultural machine 10, of the determined area based on at least one of an agricultural machine property, a predetermined constraint, a pixel width, crop data or field data. Following this embodiment, the length of the determined area can be adjusted to different parameters like the machine speed, the application unit properties or maximum application rate, crop type or planting distance between trees or plants in the same crop row from field data.

According to a further embodiment, the method further comprises determining at least one of tramlines 4 and/or crop rows 3 present in the agricultural field, and determining 132 the width of the determined area based on the determined at least one of tramlines 4 and/or crop rows 3.

Following this embodiment, according to a possible example, the agricultural fields may include tramlines 4 between the crop rows 3. The tramlines 4 may comprise marks left by agricultural machinery driving across the fields to perform agricultural tasks. The tramlines 4 may preferably correspond to the regular trajectory or route that the agricultural machine follows between the crop rows 3, e.g., for the application of the agricultural product. Tramlines 4 may be therefore detected from remote imagery by means of image processing or similar techniques, such as from satellite imagery, as disclosed in WO 2023/247229 A1, hereby incorporated by reference. Alternatively, or additionally, tramlines may be determined, within the current disclosure, from field data received from the agricultural machine 10, wherein the path or trajectory data from previous agricultural product application rounds, or other uses, are stored. Further, alternatively, tramlines 4 may be determined from user input. While depicted in fig. 1B as a pair of lines, within the current disclosure, tramlines 4 may refer to single lines forming a pattern through the agricultural field, such as a digital trajectory projected on an image of the field, thereby representing the path of the agricultural machine 10 and not literally the marks left in the field. Analogously, crop rows and crop row elements may be determined similarly to how the tramlines are detected, by means of processing of remote imagery, since patterns with a specific repetition frequency on a field can be determined equally, as explained in WO 2023/247229 A1.

Hence, according to a further embodiment, the width of the determined area, the width being defined as the dimension perpendicular to the moving direction of the agricultural machine 10, can be adjusted to be the distance between tramlines or crop rows, defined from the center of said crop rows or tramlines. In this case, the determined area spans the whole application range of the agricultural machine 10 on both sides thereof, and the application rate is determined equal for both left and right side of the agricultural machine 10.

According to a further advantageous embodiment, the width of the determined area may span double the distance between two adjacent tramlines or crop rows. This case is depicted in fig. 2A, where the width of the determined area 5 covers substantially twice the tramline spacing. Following this embodiment, and depending on the crop type, further advantages can be achieved. For example, extending the width of the determined area to double the crop row spacing can avoid the problem as depicted in fig. 2B. When the crop row or the application unit are not well aligned, i.e. due to changes in the steering or planting unevenness, the determined area might not evenly cover the plants which are to be treated, and the pixels 51 contained within the area 5 might only be associated to the track or non-crop areas. This may lead to a mismatch between the determined agricultural property amount within the determined area and the actual amount of crop which should be considered. The mismatch, in turn, negatively influences the accuracy of the application rate. By doubling the width, both crop rows, to the left and to the right of the machine, are ensured to be contained in the determined area, such that the determined application rate is accurate and results in application of the required amount of agricultural product. Moreover, depending on crop type, further embodiments can be envisaged. For tree crops, and considering vertical spraying, the determined application rate may be halved so that it actually matches the amount of crop being sprayed. In this way, when the machine moves along consecutive tramlines and thus sprays on both sides of a tree placed in a given row, the applied agricultural product adds up to the total of what the specific tree requires. In case of plants, bushes or other lower crops, the machine may skip adjacent tramlines and reduce the number of passes through the field, since the application rate is adjusted to the whole agricultural property amount for the two adjacent crop rows.

According to a further embodiment, the method further comprises determining a first area and a second area, both perpendicular to the moving direction, wherein the first area extends to one side of the moving direction and the second area extends to the other side of the moving direction. Following this embodiment, a first application rate can be determined for one side of the agricultural machine, and a second application rate can be determined for the other side of the agricultural machine, hereby allowing a more targeted application rate. Following this embodiment, the determined area width for each side is to be correspondingly halved with respect of the width of the previous embodiments to achieve the desired technical effects and advantages. That is, the width of each of the first and second areas is about equal to, or less then, one tramline spacing. Thereby the total determined area, adding up the first and second areas, is the same as for the previous embodiments.

With further reference to fig. 3B, according to a further embodiment, determining an area comprises determining 133 an orientation of the at least one of tramlines or row crops and rotating 134 the determined area to match the determined orientation. Whether from imagery data, as explained above and with reference to WO 2023/247229 A1, or from machinery data or user input, not only the distance between crop rows 3 or tramlines 4 can be determined, but as well their orientation, hereby allowing a precise rotation of the determined area to match better with the driving direction of the agricultural machine 10.

According to a further embodiment, the received remote imagery comprises a plurality of pixels and determining an agricultural property for the determined area comprises determining the number of pixels comprised in the determined area, generating an agricultural property value for the determined pixels and determining an agricultural property amount for the determined area based on the agricultural property value for the determined pixels comprised in the determined area. This can be seen in fig. 2B, wherein a plurality of pixels within the determined area 5 can be seen, each pixel 51 includes an associated value and an agricultural property amount for the determined area can be correspondingly determined from these pixel values. The resulting agricultural property amount may be based on at least one of an average value of the pixel values, a median value of the pixel values, a maximum value of the pixel values, a minimum value of the pixel values, or a cumulative sum of the pixel values.

According to a further embodiment, determining the number of pixels comprised in the determined area further comprises identifying the number of pixels comprised in the determined area unrelated to the row crop. Generating an agricultural property value for the determined pixels then comprises excluding the identified pixels unrelated to the row crop.

Following this embodiment, a mask function is generated which comprises the pixels pertaining to the tramlines and/or to the spaces between plants or crop rows, hereby reducing the amount of pixels for which the agricultural property value has to be determined, increasing the accuracy of the agricultural property value.

According to the present disclosure, "masking" or a "mask function" refers to the application of data processing tools for the selection of specific pixels within an image or image data. By masking, the information outside a specific area or portion of an information carrying signal is selected or occluded or eliminated in order to focus the processing at a specific region of interest. Within the current application, both masking image data or masking bits within the digital data or imagery can be utilized. Due to the duality of image data represented as any two-dimensional array of data, masking within the current disclosure may refer to any data processing tools which select, or occlude, a subset of elements from the two-dimensional array of data, or any image processing tools which selects or occludes specific subsets of pixels.

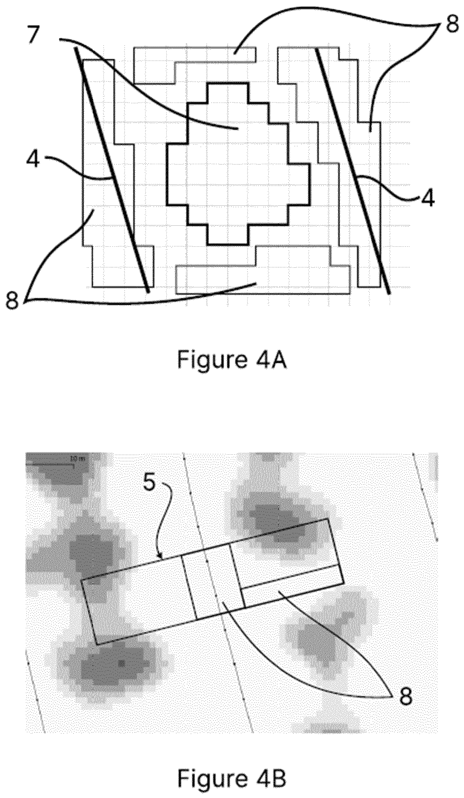

The current embodiment is schematically shown in fig. 4A. Based on the determined tramlines 4 and/or crop rows, a mask function 8 containing pixels unrelated to the crop can be generated. The mask function selects the pixels containing said tramlines and/or the space between crop row elements, contrary to the pixels containing the crop row elements 7. As disclosed in WO 2023/247229, once the pattern elements are determined (either crop rows, tramlines or crop row elements) pixels containing the pattern elements can be defined. Said pixels, and optionally neighboring pixels determined to be within a predetermined distance of the pattern elements, are determined to be unrelated to the crop. The masked pixels further reduce the number of pixels for which an agricultural property has to be determined, thereby further reducing the computational effort and producing a more accurate application rate, since pixels which could contribute to the agricultural property amount are correctly discarded (e.g. due to cover crops having a certain agricultural property value which should be disregarded).

An application of such a masking function can be seen in fig. 4B, wherein the determined area 5 is then masked or cropped with those pixels unrelated to the crop 8 in such a way that the effective area, wherein the number of pixels used for determining the agricultural property amount are effectively reduced.

According to a further embodiment, alternatively to or jointly with the previous embodiments, receiving remote imagery of the agricultural field further comprises receiving historic remote imagery from the ongoing or previous seasons, processing the historic remote imagery and adjusting the agricultural property amount based on the received historic remote imagery. Following this embodiment, further insights regarding the agricultural property can be gained by, for example, comparing the crop status with prior states in time within the crop season or with previous seasons, hereby comparing field data, properties or status from previous seasons with the current status of the crop.

According to a further embodiment, processing the historic remote imagery further comprises identifying at least one of cover crops or weed pixels, and adjusting the agricultural property comprises adjusting the agricultural property based on the identified at least one of cover crops or weed pixels.

Following this embodiment, it can be determined from further remote imagery at different points in time if the agricultural field comprises cover crops (constant "green" coverage of the agricultural field throughout the season) or weeds (quickly growing "green" spots outside of constant "green" pixels which would represent the planted crops) and the agricultural property amount of the determined area can be adjusted based thereon.

According to a further embodiment, processing the historic remote imagery further comprises receiving row crop type and carrying out at least one of background subtraction, clustering, thresholding based on the row crop type.

Following this embodiment, based for example on the crop type, e. g. for this case perennial or deciduous, historic remote imagery can be selected according to a specific time of the season to further characterize pixels within the determined area unrelated to the crop. By perennial crops, for example, receiving historic remote imagery at different times in the year can give a clearer indication of where the tramlines can be located, avoiding the problem of identifying crop rows or tramlines covered by cover crops or weeds (which are stationary or limited in the time span in which they are present in the images).

According to a further embodiment, the method further comprises applying an agricultural product to the row crops according to the determined application rate.

According to a further embodiment, the agricultural machine 10 comprises at least one acoustic or optical sensor configured to detect the presence of the crop. According to the current embodiment, the agricultural machine 10 is configured to receive crop presence information from the acoustic or optical sensor. The processing unit 31 is configured to stop the agricultural product application upon receiving information that no crop is present. Following this embodiment, despite the application map indicating a predetermined product application, the agricultural machine allows a further optimization of the product application based on ground sensing, hereby improving the current approach.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

## Claims

1. A method of determining an application rate of an agricultural product for row crops in an agricultural field, the method comprising:
- determining a position of an agricultural machine, wherein the agricultural machine is moving along crop rows in an agricultural field;
- receiving remote imagery based on the determined position;
- determining an area based on the position and the moving direction of the agricultural machine;
- determining an agricultural property amount within the determined area based on the received remote imagery;
- determining an application rate of an agricultural product for the determined area based on the determined agricultural property amount.

2. A method according to claim 1, further comprising determining the moving speed of the agricultural machine and wherein the determined area is defined as extending from a predetermined position along the moving direction of the agricultural machine, wherein the predetermined position is offset from the position of the agricultural machine based on the determined moving speed.

3. A method according to claim 1, further comprising determining at least one of tramlines and/or crop rows present in the agricultural field, and determining the width of the determined area based on the determined at least one of tramlines and/or crop rows.

4. A method according to claim 1, further comprising determining a length of the determined area based on at least one of an agricultural machine property, a predetermined constraint, a pixel width, crop data or field data.

5. A method according to claim 1, wherein the received imagery comprises a plurality of pixels and wherein determining the agricultural property amount within the determined area comprises determining the number of pixels comprised in the determined area and generating an agricultural property value for the determined pixels, the method further comprises determining the agricultural property amount within the determined area based on the agricultural property value for the determined pixels.

6. A method according to claim 5, wherein determining the number of pixels comprised in the determined area comprises identifying the number of pixels unrelated to the row crop.

7. A method according to claim 1, wherein receiving remote imagery of the agricultural field further comprises receiving historic remote imagery from the ongoing or previous seasons, and adjusting the agricultural property based on the received historic remote imagery.

8. A method according to claim 7, wherein processing the historic remote imagery further comprises identifying at least one of cover crops or weed pixels, and adjusting the agricultural property comprises adjusting the agricultural property based on the identified at least one of cover crops or weed pixels.

9. A method according to claim 8, wherein processing historic remote imagery further comprises receiving row crop type and carrying out at least one of background subtraction, clustering, thresholding based on the row crop type.

10. A method according to any one of the preceding claims, wherein the method further comprises applying an agricultural product to the row crops according to the determined application rate.

11. A data processing apparatus comprising means for carrying out the method of any one of the claims 1 to 10.

12. A system, configured to carry out the method of any one of claims 1 to 10.

13. A computer-readable storage medium comprising instructions which, when executed by a computer system, cause the system to carry out the method of any one of the claims 1 to 10.

14. A computer program product comprising instructions which, when the program is executed by a computer system, cause the system to carry out the method of any one of the claims 1 to 10.
